# EUROPÄISCHE PATENTANMELDUNG

(11) **EP 0 523 823 A1**
(43) Veröffentlichungstag der Anmeldung: **20.01.1993**
(21) Anmeldenummer: 92250189.5
(22) Anmeldetag: 16.07.1992
(51) Int. Cl.: E21B 17/10, F16L 58/10, F16B 33/06

(54) **Verwendung von Maschinenöl zur Erzeugung einer gegen Korrosion wirksamen Schutzschicht an Gewinden bei Schraubverbindungen für ölfeldrohre.**

(30) Priorität: 18.07.1991 DE 4124102
(71) Anmelder: MANNESMANN Aktiengesellschaft, D-40027 Düsseldorf (DE)
(72) Erfinder: Krings, Reiner, W-4000 Düsseldorf 31 (DE); Monser, Helmut, W-4000 Düsseldorf 1 (DE); Rohden, Volker, W-4006 Erkrath 1 (DE)
(74) Vertreter: Meissner, Peter E., Dipl.-Ing.

(57) **Zusammenfassung**

Die Erfindung betrifft ein Verfahren zum Erzeugen einer gegen Korrosion wirksamen Schutzschicht an Gewinden bei Schraubverbindungen zur Förderung von Öl oder Gas dienenden Ölfeldrohren, bei dem werksseitig vor dem Aufschrauben eines Gewindeschutzes auf die vorher gesäuberten Gewindebereiche ein korrosionshemmendes Schmiermittel aufgetragen wird. Um ein Verfahren zur Erzeugung einer gegen Korrosion wirksamen Schutzschicht auf den Gewinden bei Schraubverbindungen für Ölfeldrohre anzugeben, bei dem vor der feldmäßigen Verschraubung die Entfernung des Schutzschichtmittels und dessen Entsorgung nicht mehr erforderlich ist, wird vorgeschlagen, daß auf die Gewindebereiche ein hochviskoses, jedoch transparentes Öl aufgetragen wird, das eine visuellle Kontrolle der Gewindebereiche ermöglicht und das mit den bei der späteren Verschraubung auf dem Bohrturm verwendeten Verschraubfetten vermischbar ist.

## Beschreibung

Die Erfindung betrifft ein Verfahren zum Erzeugen einer gegen Korrosion wirksamen Schutzschicht an Gewinden bei Schraubverbindungen zur Förderung von Öl oder Gas dienenden Ölfeldrohren gemäß dem Gattungsbegriff des Hauptanspruches.

Für den Transport und die Lagerung von Ölfeldrohren ist es erforderlich, daß die empfindlichen Gewindebereiche von Muffe und Zapfen vor Schlageinwirkung mit Korrosionsangriff geschützt werden. Dazu wird auf die zuvor gesäuberten Gewindebereiche ein korrosionshemmendes Schmiermittel, z.B. API-Fett oder ein vergleichbares hochviskoses pastenartiges Mittel aufgetragen und anschließend ein Rohrendenschutz aufgeschraubt. Dabei ist es unerheblich, ob es sich um eine Muffen- oder Integralverbindung handelt.

Vor dem Einsatz im Feld wird der Rohrendenschutz, der üblicherweise aus Kunststoff oder aus stahlverstärktem Kunststoff besteht, wieder abgeschraubt. Damit vor dem Verschrauben des Stranges der Gewindebereich der einzelnen zu verbindenden Rohre noch einmal auf mechanische Beschädigungen und Korrosion hin visuell kontrolliert werden kann, muß in aufwendiger Weise das werksseitig aufgetragene korrosionshemmende Mittel wieder entfernt werden. Dazu werden lösungsmittelhaltige Reinigungsmittel verwendet und entsprechende Bürstensysteme eingesetzt. Aus Umweltschutzgründen können sowohl das entfernte Mittel als auch die dazu verwendeten Reinigungsmittel nicht einfach weggekippt werden, sondern müssen in aufwendiger Weise entsorgt werden.

Aufgabe der Erfindung ist es, ein Verfahren zur Erzeugung einer gegen Korrosion wirksamen Schutzschicht auf den Gewinden bei Schraubverbindungen für Ölfeldrohre anzugeben, bei dem vor der feldmäßigen Verschraubung die Entfernung des Schutzschichtmittels und dessen Entsorgung nicht mehr erforderlich ist.

Diese Aufgabe wird in der Weise gelöst, daß auf die Gewindebereiche ein hochviskoses, jedoch transparentes Öl aufgetragen wird, das eine visuelle Kontrolle des Gewindebereiches ermöglicht und das mit den bei der späteren Verschraubung auf dem Bohrturm verwendeten Verschraubfetten vermischbar ist.

Der Vorteil dieses Verfahrens liegt darin, daß ohne Einbußen hinsichtlich der Erzeugung eines temporären Korrosionsschutzes das kostenträchtige Reinigungsverfahren und die anschließende aufwendige Entsorgung der verwendeten Mittel entfallen kann. Die aufgetragene Ölfilmdicke ist so gering, daß nach dem Abschrauben des Rohrendenschutzes durch die Transparenz des Ölfilmes eine visuelle Kontrolle der Gewindebereiche möglich ist, ohne daß der Ölfilm mit einem Reinigungsmittel entfernt werden muß. Darüber hinaus ist die Entfernung des Ölfilmes hinsichtlich der späteren Verschraubung im Feld nicht erforderlich, da das Öl mit den üblichen verwendeten Verschraubfetten vermischbar ist und die Wirksamkeit des Verschraubfettes in keiner Weise beeinträchtigt wird. Ganz besonders wirksam in dieser Hinsicht hat sich das an sich bekannte Gleitbahnöl erwiesen. Wenn dieses Gleitbahnöl mit einer kinematischen Viskosität von 460 mm²/s bei 40^{o} C verwendet wird, hat es überdies noch den Vorteil, daß der aufgeschraubte Kunststoffrohrendenschutz besser haftet und bei den Transportbewegungen sich nicht lösen kann.

Anhand eines Ausführungsbeispieles wird das erfindungsgemäße Verfahren näher erläutert.

Es zeigen:
- Fig. 1a: Gewinderohr mit Zapfenelement
- Fig. 1b: Rohrendenschutz für Zapfenelement
- Fig. 2a: Gewinderohr mit aufgeschraubter Muffe
- Fig. 2b: Rohrendenschutz für Muffenelement
- Fig. 3: Gewinderohr (Zapfen) mit aufgeschraubtem Rohrendenschutz
- Fig. 4: Gewinderohr mit aufgeschraubter Muffe und eingeschraubtem Rohrendenschutz

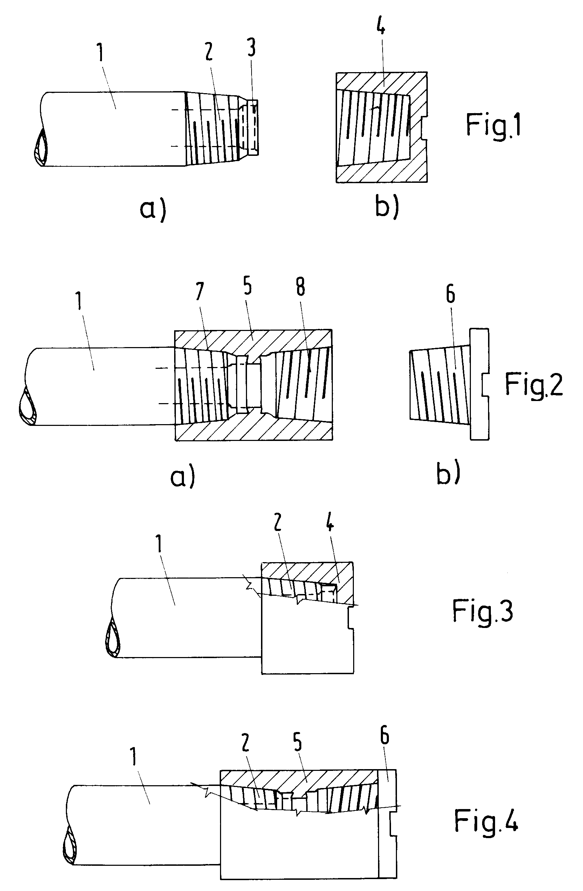

In Figur 1 ist im Teilbild a ein Gewinderohr 1 mit einem als Zapfen 2 ausgebildeten Gewindebereich dargestellt, dessen gewindefreier Stirnbereich hier in diesem Beispiel eine Stoßschulter 3 aufweist. Im Teilbild b ist in einem Längsschnitt ein für ein Zapfenelement passend ausgebildeter Rohrendenschutz 4 dargestellt. Üblicherweise wird dieser Rohrendenschutz 4 aus durch Stahlblech verstärktem Kunststoff hergestellt.

Teilbild a der Figur 2 zeigt ein vergleichbares Gewinderohr 1 wie in Fig. 1 dargestellt, mit dem Unterschied, daß als Verbindungselement eine Muffe 5 aufgeschraubt ist. Die Muffe 5 hat zwei Innengewindebereiche 7,8, die komplementär zum jeweiligen Zapfenelement 2 ausgebildet sind. Alternativ wäre es auch möglich gewesen, für eine Integralverbindung das Rohrende selbst als Muffenelement auszubilden.

Im Teilbild b der Figur 2 ist der entsprechend in die Muffe 5 einschraubbare Endenschutz 6 im Längsschnitt dargestellt.

Das erfindungsgemäße Verfahren besteht nun darin, daß die ungeschützten Gewindebereiche 2,8 zuerst gesäubert und dann mit einem hochviskosen, aber transparentem Öl eingepinselt werden. Danach wird der jeweilige Rohrendenschutz 4 bzw. 6 auf den Gewindebereich 2,8 aufgeschraubt bzw. eingeschraubt.

Figuren 3 und 4 zeigen diesen Zustand, wobei der Rohrendenschutz 4,6 die Transportsicherung der ungeschützten Gewindebereiche 2,8 übernimmt. Die an den Bestimmungsort gelieferten Gewinderohre 1 werden entweder zwischengelagert oder gleich auf die Baustelle geschafft. Bei der Zwischenlagerung wirkt das auf die Gewindebereiche 2,8 aufgepinselte Öl als temporärer Korrosionsschutz. Der Vorteil des vorgeschlagenen Verfahrens ist darin zu sehen, daß nach dem Abschrauben des jeweiligen Rohrendenschutzes 4,6 die Gewindebereiche 2,8 visuell auf Beschädigungen und Korrosionsangriff kontrolliert werden können, ohne daß der Ölfilm in aufwendiger Weise entfernt und entsorgt werden muß. Bevor die Gewinderohre 1 miteinander verschraubt werden, wird auf die Gewindebereiche 2,8 mit dem verbliebenen Ölfilm ein standardmäßiges Verschraubfett aufgetragen, da das Öl so ausgewählt worden ist, daß es mit dem Verschraubfett mischbar ist und die Wirksamkeit des Verschraubfettes durch die Vermischung nicht beeinträchtigt wird. Die Verschraubung der Gewinderohre 1 selbst und das Ablassen des Stranges erfolgt dann in der bekannten Art und Weise.

## Patentansprüche

1. Verfahren zum Erzeugen einer gegen Korrosion wirksamen Schutzschicht an Gewinden bei Schraubverbindungen zur Förderung von Öl oder Gas dienenden Ölfeldrohren, bei dem werksseitig vor dem Aufschrauben eines Gewindeschutzes auf die vorher gesäuberten Gewindebereiche ein korrosionshemmendes Schmiermittel aufgetragen wird,
**dadurch gekennzeichnet,**
daß auf die Gewindebereiche ein hochviskoses, jedoch transparentes Öl aufgetragen wird, das eine visuelle Kontrolle der Gewindebereiche ermöglicht und das mit den bei der späteren Verschraubung auf dem Bohrturm verwendeten Verschraubfetten vermischbar ist.

2. Verfahren nach Anspruch 1,
**dadurch gekennzeichnet,**
daß das Öl ein Gleitbahnöl ist.

3. Verfahren nach Anspruch 1 oder 2,
**dadurch gekennzeichnet,**
daß das Gleitbahnöl eine kinematische Viskosität von mindestens 200 mm²/s bei 40^{o} C aufweist.

4. Verfahren nach Anspruch 3,
**dadurch gekennzeichnet,**
daß die kinematische Viskosität des Gleitbahnöles 460 mm²/s bei 40^{o} C beträgt.
